# EUROPEAN PATENT APPLICATION

(11) **EP 2 439 926 A1**
(43) Date of publication of application: **11.04.2012**
(21) Application number: 09845972.0
(22) Date of filing: 19.06.2009
(51) Int. Cl.: H04N 5/00

(54) **METHOD FOR REALIZING FILE BROWSING ON TELEVISION**

(71) Applicant: Shenzhen TCL New Technology Co., LTD, Nanshan District Shenzhen Guangdong 518067 (CN)
(72) Inventor: FU, Yaoyuan, Shenzhen Guangdong 518067 (CN); NING, Shangguo, Shenzhen Guangdong 518067 (CN); TIAN, Jiantao, Shenzhen Guangdong 518067 (CN)
(74) Representative: Manitz, Finsterwald & Partner GbR
(86) International application number: PCT/CN2009/000682
(87) International publication number: WO 2010/145058

(57) **Abstract**

A browsing method of browsing files of a television includes the following steps: sorting the files in a selected file directory of the television to allow the files to be listed in sequence; and displaying or playing the files sequentially according to the listing sequence, executing a corresponding displaying and playing assembly to display or play the files of a second type when the files of a first type have been displayed or played completely. The browsing method of the present invention allows the television to display or play different types of files automatically without any delay and any engagement from the user, which improves the efficiency to browse the files.

## Description

### BACKGROUND

### 1. Technical Field

The present invention relates to displaying technologies, and particularly, to a browsing method of browsing files of a television.

### 2. Description of Related Art

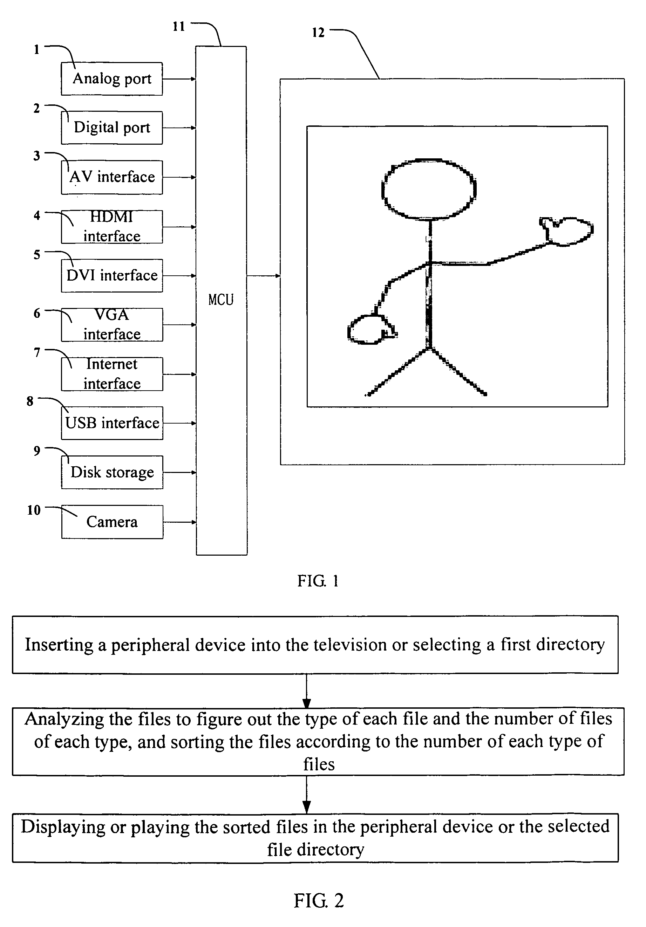

With the development of technologies, a television often acts as a medium center in a family and has played a more and more important role in our daily life. Referring to FIG. 1, which is a functional block diagram of a conventional television with a number of functions. As the medium center in a family, the conventional television often includes an inputting device. The inputting device includes an analog port 1 for receiving analog television signals, a digital port 2 for receiving digital television signals, an audio and video (AV) interface 3 for receiving composite analog signals, a high-definition digital multimedia interface (HDMI) 4, a digital visual interface (DVI) 5, a video graphics array (VGA) interface 6, an internet interface 7 for connecting the television with the internet such that the television can work as an interactive personality TV (IPTV) to allow a user to download or surf on the internet, an universal serial bus (USB) interface 8 for interactively connecting the television with peripheral devices such a USB device and a MP3 music player, a disk storage 9 for recording television programs, storing files downloaded from the internet, etc., a camera 10 for capturing images or recording activities, a micro-chip unit (MCU) 11 for controlling, receiving and processing signals transmitted from external interfaces, and further sending the signals to a display unit 12. The HDMI 4 and the DVI 5 are all digital interfaces which can be connected to the peripheral devices to allow the files stored in the peripheral devices to be displayed in the television.

From the above description, it can be concluded that the television as the medium center in a family nowadays has to process various types of files accompanied with the development of computer technologies, such as audio files, video files, image files, text files, flash files and the like. The files are often stored in storage devices such as a USB device, a hard disk, and a network server. When users want to browse these files, the television reads the files from the storage devices and plays the files according to desires of users.

Generally, a number of applications are stored in the computer for displaying or playing the various types of files respectively. Each type of files needs to be displayed or played via a corresponding application. When users want to browse a file, they often need to select the file and then open the file by the corresponding application. Sometimes, users can activate the application at first and then select a corresponding file to allow the file to be opened. However, in this situation, users need to figure out the relationship between the file and the application, which is inhumane. Additionally, when users want to browse the files stored in the storage device or peripheral devices automatically, the computer can only play the files of the same type automatically. In this situation, users need to open a next file of a different type to allow the computer to display or play the files of the different type.

Since the user interface of the television is much simpler than that of the computer, users need to operate the television a lot to browse the files of different types stored in the storage device or the peripheral devices, which is complicated to many users.

Therefore, there is room for improvement.

### SUMMARY

One object of the present invention is to provide a browsing method of browsing files via a television such that the files can be browsed in the television automatically.

A browsing method of browsing files of a television is provided. The browsing method includes the following steps: sorting the files in a selected file directory of the television to allow the files to be listed in sequence; and displaying or playing the files sequentially according to the listing sequence, executing a corresponding displaying and playing assembly to display or play the files of a second type when the files of a first type have been displayed or played completely.

Preferably, the step of sorting the files in a selected file directory of the television to allow the files to be listed in sequence includes the following steps:
analyzing the files in the selected file directory to figure out the type of each file and the number of the files of each type, and sorting the files according to the number of the files of each type.

Preferably, when analyzing the selected files, the files which are incapable of being displayed or played by the first and second displaying and playing assembly of the television are ignored.

Preferably, the step of sorting the files in a selected file directory of the television to allow the files to be listed in sequence; includes the following steps:
obtaining the property of a peripheral device inserted into the television and setting a top priority to the files in the selected file directory which have the type corresponding to the property of the peripheral device;
figuring out the number of the other files in the peripheral device which have the types different from the property of the peripheral device, and sorting the other files according to the number of files of each type.

Preferably, the step of sorting the files in a selected file directory of the television to allow the files to be listed in sequence; includes the following step:
sorting the files based on a preset priority level in the television.

Preferably, the priority level is capable of being set by users.

Preferably, the step of sorting the files based on a preset priority level in the television includes the following step:
sorting other files which have the file types out of the priority level based on the number of the other files of each type.

Preferably, the browsing method further includes the following step:
sorting the files of each type according to a date of a volume of each file.

Preferably, the browsing method further includes the following step:
providing a menu allowing for browsing and sorting the files automatically to allow the user to sort and browse the files, the menu includes at least two options which can be selected to sort the files according to the number of the files of each type, or according to the preset priority level in the television.

Preferably, the file directory is stored in a storage device of the television or stored in a peripheral device of the television.

With the browsing method of the present invention, users are capable of sorting the files stored in the storage device or the peripheral device of the television to allow the files to be listed in sequence when browsing the files. Therefore, the files can be displayed or played according their position in the listing sequence. When the types of the files switch from a preceding type to a next type which is different from the preceding type, the television is capable of executing the displaying and playing assembly corresponding to the next type to display or play the files automatically. Thus, the files can be displayed or played without any delay or engagement from the user.

### DISCRIPTION OF THE DRAWINGS

Many aspects of the embodiments can be better understood with reference to the following drawings. The components in the drawings are not necessarily dawns to scale, the emphasis instead being placed upon clearly illustrating the principles of the embodiments. Moreover, in the drawings, like reference numerals designate corresponding parts throughout the several views.
FIG. 1 is a schematic view of a conventional television of a lot of functions.
FIG. 2 is a flow chart of a browsing method of browsing files of a television in accordance with a first embodiment of the present invention.
FIG. 3 is a flow chart of a browsing method of browsing files of a television in accordance with a second embodiment of the present invention.
FIG. 4 is a flow chart of a browsing method of browsing files of a television in accordance with a third embodiment of the present invention.
FIG. 5 is a detailed flow chart of the method of FIG. 1.
FIG. 6 is a schematic view showing a menu allowing for browsing and sorting files automatically.

### DETAILED DESCRIPTION

The disclosure is illustrated by way of example and not by way of limitation in the figures of the accompanying drawings in which like references indicate similar elements. It should be noted that references to "an" or "one" embodiment is this disclosure are not necessarily to the same embodiment, and such references mean at least one.

As described above, in personal computers, a particular type of files needs to be opened using a corresponding type of application. Similarly, in a television, each type of files also needs to be displayed or played using a corresponding type of application. In an embodiment of the present invention, the applications used for displaying or playing various kinds of files are referred but not limited to displaying and playing assemblies. The displaying and playing assemblies can be configured in the television by the manufacturer, or can be added according to the desire of users. The relationship between each displaying and playing assembly and the corresponding file type can be described as follows:
a first displaying and playing assembly 1-> jpg, bmp, mov, gif,...
a second displaying and playing assembly 2-> doc, pdf, xls, ppt,...
a third displaying and playing assembly 3-> avc, mp3, wav , ...

When the television needs to play or display one of the files, the television is operated to execute a corresponding displaying and playing assembly matching the type of the file for displaying or playing the file.

A browsing method is provided to display or play different types of files stored in a storage device or a peripheral device of the television automatically to allow users to browse the files automatically. With the browsing method, the files are sorted and listed in sequence, and then displayed or played according to their positions in the listing sequence. To each type of files, the television is capable of executing the corresponding displaying and playing assembly matching the type of the files to display or play the files automatically. That is, in the process of automatically browsing the files, the files are firstly sorted by the browsing method according to the types thereof to allow the television to display or play the sorted files in the listing sequence automatically. When types of the files switch from a preceding type to a next type which is different from the preceding type, the television is capable of executing the displaying and playing assembly corresponding to the next type automatically without the engagement from the users.

Referring to FIG. 2, in a first embodiment, the files stored in a peripheral device inserted into the television or a selected file directory of the television are sorted according to the number of the files of each type. When the peripheral device is inserted into the television or the file directory is selected, the television at first analyzes the files to figure out the type of all files and the number of the files of each type, and then sorting all the files according to the number of the files of each type. For example, when the selected file directory is opened, the files are analyzed and the information about the files is obtained as shown in the following table.

**Table one: information of the files in the file directory**

| File extension (type) of the file | Classification of the file | Corresponding displaying and playing assembly | Number of each type of files |
|---|---|---|---|
| jpg | image | assembly 1 | 10 |
| bmp | image | assembly 1 | 2 |
| mov | video | assembly 1 | 5 |
| gif | image | assembly 1 | 1 |
| doc | text | assembly 2 | 1 |
| pdf | text | assembly 2 | 0 |
| xls | text | assembly 2 | 0 |
| ppt | text | assembly 2 | 1 |
| avc | audio | assembly 3 | 2 |
| mp3 | audio | assembly 3 | 1 |
| wav | audio | assembly 3 | 2 |

According to the above table one, it is concluded that the number of the files of the type "jpg", the number of the files of the type "mov", and the number of the files of the type "pdf" and "xls" range from high to low. Therefore, the files of the type "jpg" have the top priority, and the files of the type "mov" have the second priority. The files of the same type can further be sorted according to the date when each file is created or the volume of each file.

It is noted that in some embodiments not all files stored in the peripheral device or stored in the selected file directory are sorted, but only the files which can be recognized by the system of the television are sorted. That is, the files of a type which cannot be recognized by the television are ignored, which improves the efficiency to process the files.

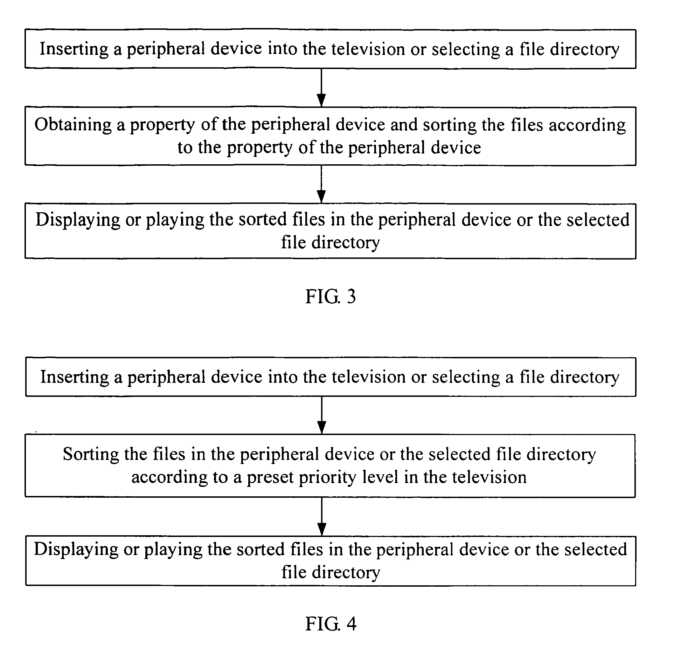

Referring to FIG. 3, in a second embodiment, the files stored in the peripheral device are sorted according to the property of the peripheral device. When the peripheral device is inserted into the television, the property of the peripheral device is analyzed by the television. The files having the type corresponding to the property of the peripheral device are assigned to the top priority, and the other files can be sorted according to the browsing method in the first embodiment.

For example, when the peripheral device inserted into the television is an audio playing device such as a MP3 music player or the like, the files of the type "MP3" are assigned to the top priority. When the peripheral device inserted into the television is an image capturing device such as a digital camera or the like, the files of the type "jpg" are assigned to the top priority. When the peripheral device inserted into the television is a storage device such as a USB device, the files in the USB device can be sorted by the browsing method in the first embodiment.

Referring to FIG. 4, in a third embodiment, the files stored in the peripheral device or the selected file directory are sorted according to a priority level preset in the television. For example, if the types "jpg", "bmp", "mov", and "gif" are arranged in order on the preset priority level, the files stored in the peripheral device or the selected file directory as shown in the above table one are displayed or played based on the preset priority level. That is, the files of the type "jpg" have the top priority, the files of the type "bmp" have the second priority, the files of the type "mov" have the third priority, and the files of the type of "gif" have the bottom priority. Each type of files can further be sorted according to the date when each file is created or the volume of each file. Other files which are not located in the priority level of the television can be sorted by the browsing method in the first embodiment. That is, other files which are out of the priority level of the television can be displayed or played based on the number of the files of each type.

The priority level can be set by the manufacturer in the manufacturing process of the television, or can be set by users by any known technology.

The browsing method in the three embodiments can be used independently or combinedly. When the browsing method in the three embodiments are used combinedly, the files having the type corresponding to the property of the peripheral device can be assigned to the top priority, and the other files which can be sorted according to the number of the files of each type. Alternatively, the files having the type located in the top position of the preset priority level can be displayed or played in priority, and the other files which are not located in the preset priority level can be sorted using the browsing method in the first embodiment.

After the files needed to be played or displayed are sorted, the system of the television is capable of executing a first corresponding displaying and playing assembly to display or play the files of the type having the top priority. After the files of the type having the top priority have been displayed or played completely, the television is capable of executing a second corresponding displaying and playing assembly to display or play the files of the type having the second priority, and as so on. When the types of the files switch from the preceding type to the next type, the television is capable of executing the displaying and playing assembly corresponding to the type of the to-be-displayed file automatically. Thus, the files can be displayed or played without any delay.

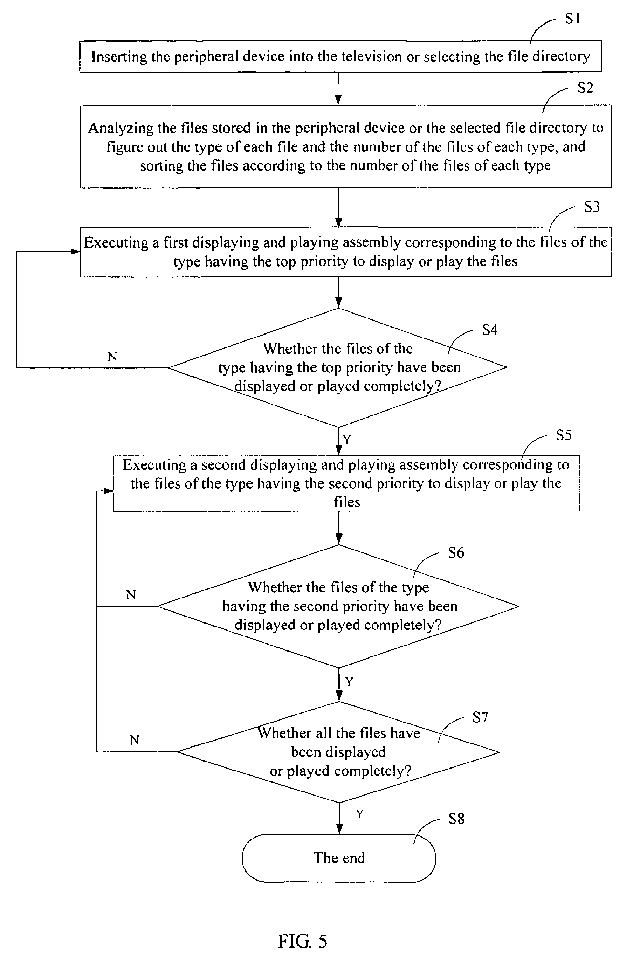

Referring to FIG. 5, a browsing method of browsing files of the television in the first embodiment includes the following steps:
In step S1, inserting the peripheral device into the television or selecting the file directory.
In step S2, analyzing the files in the peripheral device or the file directory to figure out the type of each file and the number of the files of each type, and sorting the files according to the number of files of each type.
In step S3, executing the first corresponding displaying and playing assembly to display or play the files of the type having the top priority.
In step S4, judging whether the files of the type having the top priority have been displayed or played completely, if yes, goes to step 5; otherwise, goes to step 3.
In step S5, executing the second corresponding displaying and playing assembly to display or play the files of the type having the second priority;
In step S6, judging whether the files of the type having the second priority have been displayed or played completely, if yes, goes to step 7; otherwise, goes to step 5.
In step S7, judging whether all the files in the peripheral device or the file directory have been displayed or played or not, if yes, goes to step 8; otherwise, goes to step 5.
In step S8, the end.

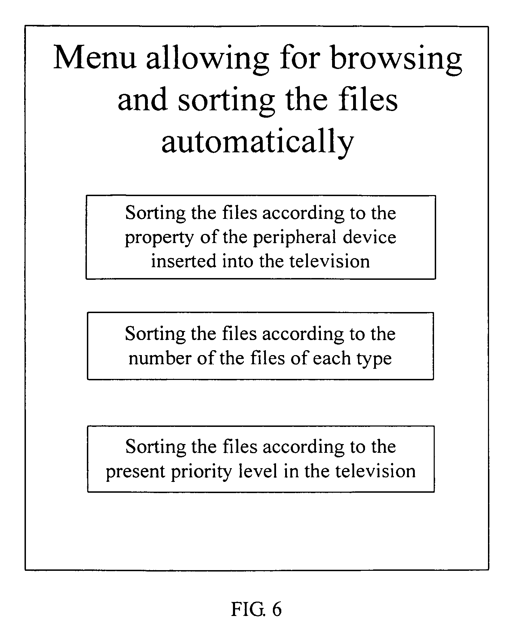

Referring to FIG. 6, a menu allowing for browsing and sorting the files automatically is provided to allow the files to be sorted and displayed or played based on the browsing method of the three embodiments. The menu includes a first option, a second option, and a third option. The first option can be selected to allow the files to be sorted based on the property of the peripheral device. The second option can be selected to allow the files to be sorted based on the number of the files of the same type. The third option can be selected to allow the files to be sorted based on the preset priority level in the television. The third option in some embodiments may further include a sub-option which includes a number of choices which can be selected to allow the files in each type to be further sorted.

Even though information and the advantages of the present embodiments have been set forth in the foregoing description, together with details of the mechanisms and functions of the present embodiments, the disclosure is illustrative only; and that changes may be made in detail, especially in matters of shape, size, and arrangement of parts within the principles of the present embodiments to the full extend indicated by the broad general meaning of the terms in which the appended claims are expressed.

## Claims

1. A browsing method of browsing files via television, comprising:
sorting the files in a selected file directory of the television to allow the files to be listed in sequence; and
displaying or playing the files sequentially according to the listing sequence, executing a corresponding displaying and playing assembly to display or play the files of a second type when the files of a first type have been displayed or played completely.

2. The browsing method as claimed in claim 1, wherein the step of sorting the files in a selected file directory of the television to allow the files to be listed in sequence comprises the following step:
analyzing the files in the selected file directory to figure out the type of each file and the number of the files of each type, and sorting the files according to the number of the files of each type.

3. The browsing method as claimed in claim 2, wherein when analyzing the files, the files which are incapable of being displayed or played by the displaying and playing assemblies of the television are ignored.

4. The browsing method as claimed in claim 1, wherein the step of sorting the files in a selected file directory of the television to allow the files to be listed in sequence; comprises the following steps:
obtaining the property of a peripheral device inserted into the television and setting a top priority to the files in the file directory which have the type corresponding to the property of the peripheral device;
figuring out the number of the other files in the peripheral device which have the types different from the property of the peripheral device and sorting the other files according to the number of files of each type.

5. The browsing method as claimed in claim 1, wherein the step of sorting the files in a selected file directory of the television to allow the files to be listed in sequence; comprises the following step:
sorting the files based on a preset priority level in the television.

6. The browsing method as claimed in claim 5, wherein the priority level is capable of being set by users.

7. The browsing method as claimed in claim 5, wherein the step of sorting the files based on a preset priority level in the television corresponding to the types of the files comprises the following step:
sorting other files which have the file types being out of the priority level based on the number of the other files of each type.

8. The browsing method as claimed in claim 2 or claim 4 or claim 5 further comprising the following step:
sorting the files of the same type according to a date when each file is created or a volume of each file.

9. The browsing method as claimed in claim 1 further comprising the following step:
providing a menu allowing for browsing and sorting the files automatically to allow the user to select, the menu comprises at least two options.

10. The browsing method as claimed in claim 1, wherein the file directory is stored in a storage device of the television or stored in a peripheral device of the television.
